# EUROPÄISCHE PATENTSCHRIFT

(11) **EP 3 376 619 B1**
(45) Veröffentlichungstag und Bekanntmachung des Hinweises auf die Patenterteilung: **26.07.2023**
(21) Anmeldenummer: 18162593.0
(22) Anmeldetag: 19.03.2018
(51) Int. Cl.: H02G 3/04

(54) **GEHÄUSE FÜR EIN STECKKONTAKTELEMENT ZUR ABHÖRSICHEREN VERSORGUNG EINER IT-KOMPONENTE MIT ELEKTRISCHER ENERGIE SOWIE STECKKONTAKT**
HOUSING FOR A CONTACT ELEMENT FOR INTERCEPTION-PROOF SUPPLY OF AN IT COMPONENT WITH ELECTRIC ENERGY AND PLUG CONTACT
BOÎTIER POUR UN ÉLÉMENT DE CONTACT ENFICHABLE DESTINÉ À L'ALIMENTATION SANS RISQUE DE MANIPULATION D'UN COMPOSANT INFORMATIQUE À ÉNERGIE ÉLECTRIQUE AINSI QUE CONTACT ENFICHABLE

(30) Priorität: 17.03.2017 DE 202017001434 U
(43) Veröffentlichungstag der Anmeldung: 19.09.2018
(73) Patentinhaber: Heinen Elektronik GmbH, 42781 Haan (DE)
(72) Erfinder: HEINEN, Peter, 40724 Hilden (DE); HELLMANN, Reiner, 42791 Solingen (DE)
(74) Vertreter: Grosse Schumacher Knauer von Hirschhausen

(56) Entgegenhaltungen:
- DE-A1- 3 230 545
- DE-A1- 3 328 242
- DE-A1- 4 431 281
- DE-C1- 3 427 936
- DE-U1-202011 005 191
- GB-A- 738 884
- GB-A- 2 244 605
- GB-A- 2 326 371
- GB-A- 2 337 868

## Beschreibung

### Gebiet der Erfindung

Die Erfindung betrifft ein Gehäuse für ein Steckkontakteiement zur abhörsicheren Versorgung einer IT-Komponente wie etwa eines Computers mit elektrischer Energie sowie ein System umfassend ein Steckkontaktelement und ein Gehäuse und ein Verfahren zum Zusammenbau eines Systems gemäß den Merkmalen des Obergriffs des Anspruch 1, 10 bzw. 11.

### Technologischer Hintergrund

Ein Angriffsvektor zur Datenspionage setzt an den Stromleitungen von IT-Komponenten an. An öffentliche (Haus-)Stromversorgungsnetze angeschlossene Monitore, Computer, Festplattenstationen, biometrische und andere Zugangsvorrichtungen, Kryptographievorrichtungen und dergleichen elektrische und elektronische Geräte (nachfolgend IT-Komponenten genannt) speisen im Betrieb unvermeidbar Signale in das Stromnetz zurück, die von einem Angreifer direkt am Stromversorgungsnetz oder indirekt über weitere Kopplungen, beispielsweise an metallischen Rohrleitungssystemen, abgegriffen und ausgewertet werden können zwecks Rückschluss auf digitale oder analoge Informationen wie etwa auf die an einem Computer angezeigten Daten.

Zur Vermeidung der Einkopplung derartiger Signale in ein Stromnetz bei sicherheitsrelevanten Tätigkeiten, z.B. im militärischen Bereich oder bei Banken, finden im Stand der Technik z.B. nach DE 20 2011 005 191 U1 Steckkontaktelemente mit einer EMV-Dichtung Verwendung. Aus der GB 2 244 605 A ist ein Gehäuse mit einem langgestreckten Gehäuseprofil und einem langgestreckten Bodenprofil, mit einem Eingriff zwischen Gehäuse- und Bodenprofil und einem das Lösen des Eingriffs verhindernden Sicherungselement, welches stirnseitig in das Bodenelement eingeschoben ist, bekannt.

Nachteilig ist dabei der aufwändige Aufbau zum Verhindern des einfachen Öffnens bei Manipulationsversuchen sowie zum Erreichen der teils normenbedingt vorgegebenen Abschirmwerte.

### Zusammenfassung der Erfindung

Der Erfindung liegt daher die Aufgabe zugrunde, ein Gehäuse für ein Steckkontaktelement zur abhörsicheren Versorgung einer IT-Komponente wie etwa eines Computers mit elektrischer Energie sowie eir System umfassend ein Steckkontaktelement und ein Gehäuse und ein Verfahren zu dessen Zusammenbau nach dem Oberbegriff des Anspruchs 1, 10 bzw. 11 zu schaffen, die bei vereinfachtem Aufbau einen erhöhten Manipulationswiderstand sowie einen verbesserten Schutz gegen stromversorgungsseitiges Abhören bieten.

Diese Aufgabe wird entsprechend den Merkmalen des Anspruchs 1, 10 bzw. 11 gelöst.

Demnach wird ein Gehäuse für ein Steckkontaktelement zur abhörsicheren Versorgung einer IT-Komponente wie etwa eines Computers mit elektrischer Energie geschaffen, umfassend ein langgestrecktes Gehäuseprofil, ein langgestrecktes Bodenprofil und ggf. zwei Endkappen, wobei ein einen Eingriff zwischen Gehäuse- und Bodenprofil und ein ein Lösen des Eingriffs verhinderndes Sicherungselement vorgesehen sind.

Durch das Sicherungsblech und den Eingriff ist das Gehäuse nach Montage von außen nicht mehr einfach zu öffnen. So beschränkt das Sicherungselement zumindest diejenige Bewegungsrichtung ineinander eingreifender Elemente oder Abschnitte oder Teile des Gehäuse- und/oder der Bodenprofils, die zum Lösen des Eingriffs erforderlich ist.

Vorzugsweise ist das Sicherungselement flach und beispielsweise im Wesentlichen rechteckförmig, insbesondere ein Stahlblech, welches infolge zweckmäßiger stirnseitiger Verjüngung in das mit dem Gehäuseprofil verbundene Bodenprofil auf einfache Weise einschiebbar sein kann und vorteilhafterweise eine den Eingriff verfestigende Spreizwirkung entfaltet. Das Sicherungselement kann jedoch auch segmentiert sein. Gegebenenfalls können mehrere Sicherungselemente vorgesehen sein.

Ist das Gehäuseprofil im Wesentlichen U-förmig und weist an den Enden der beiden freien Schenkel jeweils ein Gehäuseprofil-Verbindungselement auf zum Eingriff mit einem Gegenstück am Bodenprofil, und ist das Bodenprofil flach und an den längsseitigen Enden mit jeweils einem Bodenprofil-Verbindungselement versehen als Gegenstück, können die beiden Elemente auf einfache Weise ineinandergeschoben oder - gesteckt oder, wenn der Eingriff vorteilhafterweise als Schnappverbindung ausgestaltet ist, ineinandergedrückt werden. Das Sicherungselemet verhindert dabei ein Öffnen der Verbindung.

Im Eingriff befindet sich eine EMV-Dichtung, die insbesondere bei elastischem Eingriff vom Sicherungselement unter Komprimierung des Eingriffs fest an das Bodenprofil und das Gehäuseprofil angerückt wird unter Sicherstellung einer durchgängigen Abschirmung.

Die Erfindung schafft ferner ein System umfassend ein Steckkontaktelement zur abhörsicheren Versorgung einer IT-Komponente wie etwa eines Computers mit elektrischer Energie, und ein Gehäuse, in welchem ein Steckkontakt zum elektrischen Anschluss der IT-Komponente vorgesehen sein kann, einen sich aus dem Gehäuse heraus erstreckenden elektrischen Verbinder zum Anschluss an eine Energiequelle wie etwa eine Hausstromsteckdose sowie ein im Gehäuse angeordnetes Filterelement, wobei das Gehäuse energiequellenanschlussseitig eine separat ausgebildete, elektrisch leitende Endkappe aufweist, die das Filterelement trägt und mit dem Gehäusekörper über eine EMV-Dichtung verbunden ist. Die Erfindung schafft schließlich ein Verfahren zum Zusammenbau des Systems nach Anspruch 10.

Weitere Eigenschaften und Ausführungsformen der Erfindung ergeben sich aus der nachfolgenden Beschreibung beispielhafter Ausführungsformen, den Figuren und den Ansprüchen.

### Kurzbeschreibung der Figuren

Fig. 1 zeigt ein Bodenprofil und ein Gehäuseprofil im Schnitt.
Fig. 2 zeigt das Bodenprofil und das Gehäuseprofil der Fig. 1 in zusammengesetztem Zustand im Schnitt.
Fig. 3 zeigt das Bodenprofil und das Gehäuseprofil der Fig. 1 in zusammengesetztem Zustand in Perspektivdatstellung.
Fig. 4 zeigt ein Sicherungselement.
Fig. 5 entspricht Fig. 2 mit eingesetztem Sicherungselement der Fig. 4.
Fig. 6 entspricht Fig. 3 mit eingesetztem Sicherungselement der Fig. 4.
Fig. 7 zeigt ein Ende eines Steckkontaktelements beim Einschieben des Sicherungselements in Perspektivansicht.

### Detaillierte Beschreibung von Ausführungsbeispielen

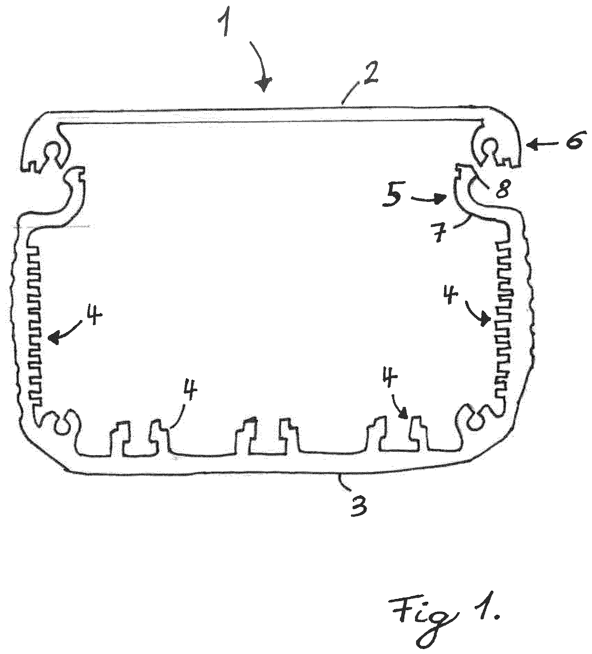

Das in Fig. 1 dargestellte Gehäuse 1 eines Steckkontaktelements umfasst ein Bodenprofil 2 und ein Gehäuseprofil 3, die zweckmäßigerweise als insbesondere aus Aluminium gefertigte Strangprofilabschnitte ausgebildet sein können.

Das Gehäuseprofil 3 kann Versteifungs- und/oder Befestigungsrippen und/oder - elemente 4 sowie einen im Wesentlichen U-förmigen Querschnitt aufweisen.

An den Enden der beiden freien Schenkel kann jeweils ein Gehäuseprofil-Verbindungselement 5 vorgesehen sein zum Eingriff mit jeweils einem als Gegenstück fungierenden Bodenprofil-Verbindungselement 6 am Bodenprofil.

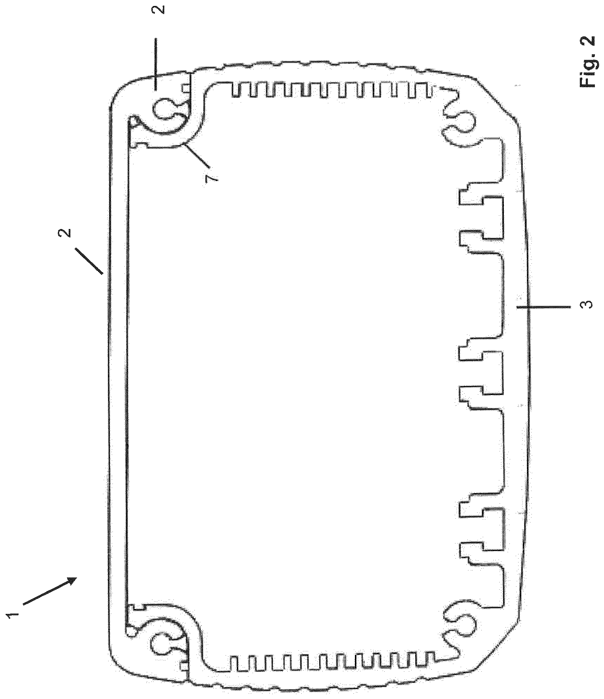

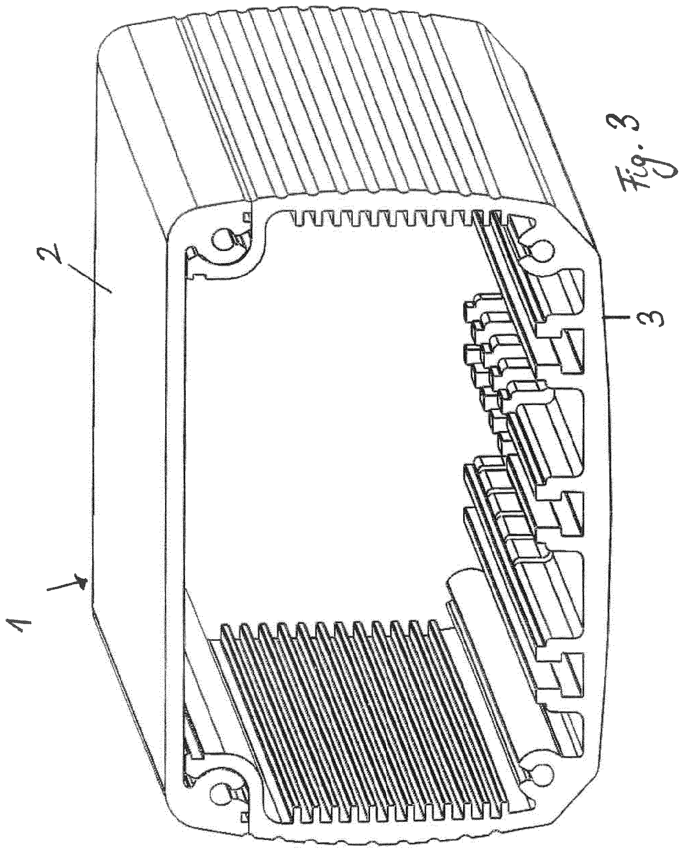

Zweckmäßigerweise sind die Verbindungselemente 5, 6 wie dargestellt als Schnappverbindung ausgestaltet. Hierzu kann das Gehäuseprofil-Verbindungselement 5 sich in einem ersten Abschnitt 7 zunächst in Richtung auf das gegenüberliegende Gehäuseprofil-Verbindungselement 5 erstrecken und sodann sich in einem weiteren Abschnitt 8 wieder davon entfernen. Durch Materialelastizität wie etwa bei Aluminium können die beiden in etwa C-förmigen Abschnitte 7, 8 ein Einrasten der Bodenprofil-Verbindungselemente 6 ermöglichen, siehe Fig. 2 und 3.

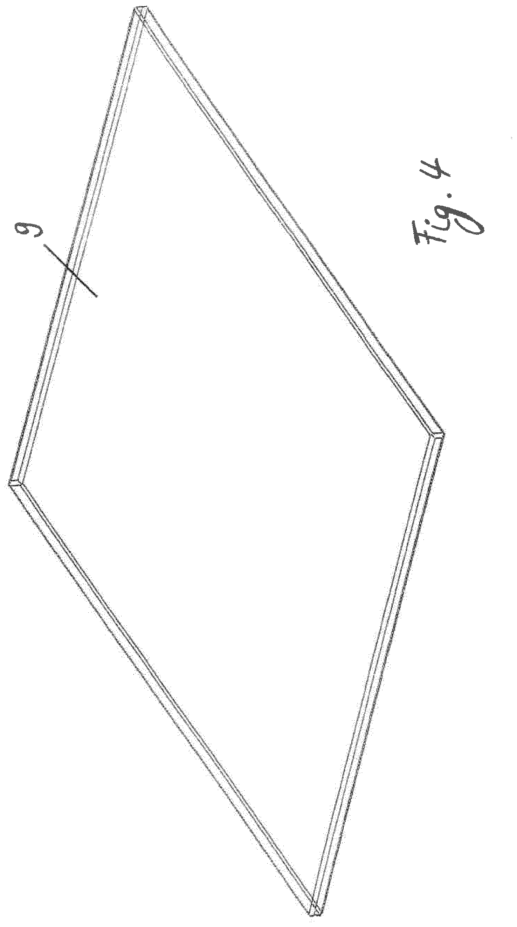

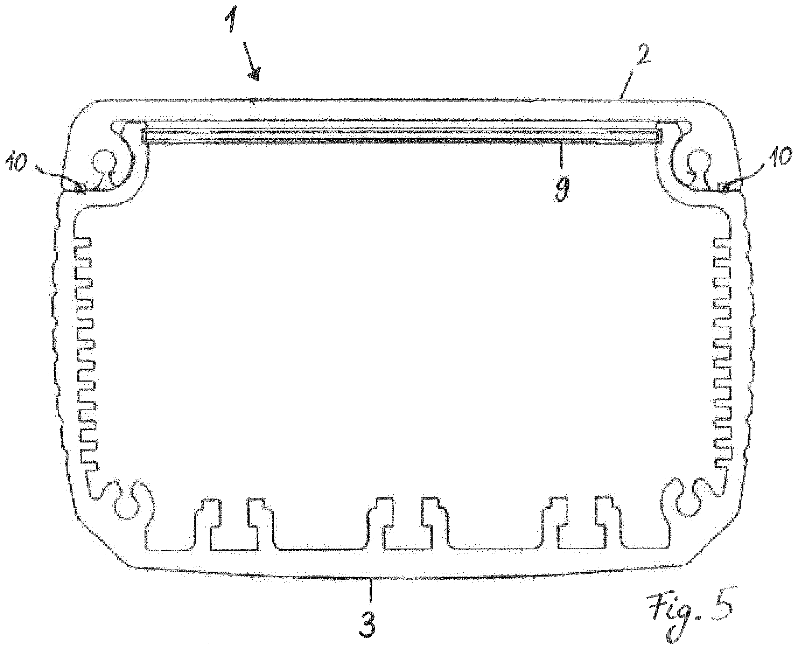

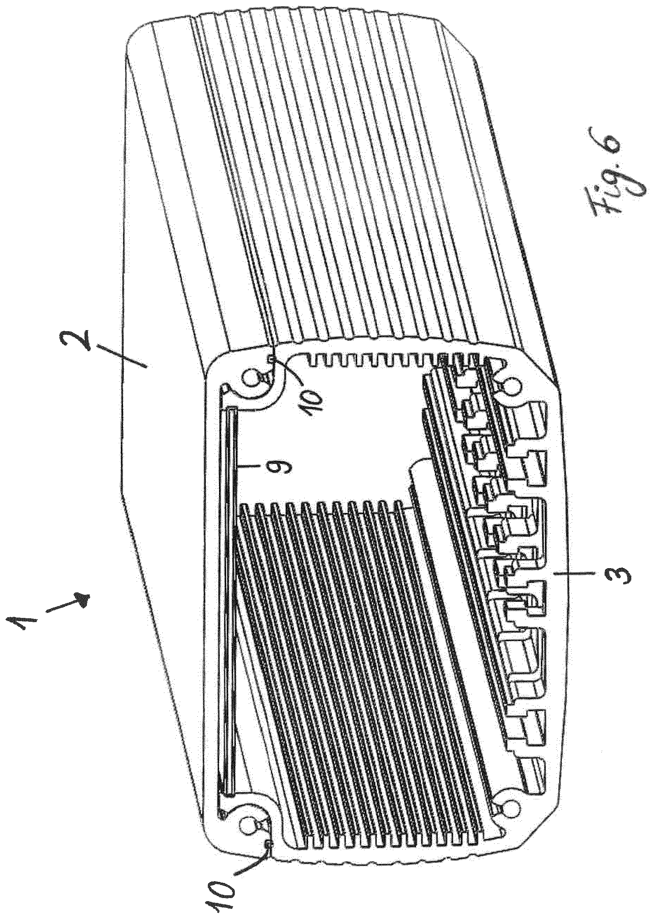

Ein in Fig 4 als Stahlblech dargestelltes Sicherungselement 9 ist nach Verbindung des Bodenprofils 2 mit dem Gehäuseprofil 3 in das Gehäuse 1 einschiebbar, siehe Fig. 5 und 6, und verhindert ein Lösen der Verbindung.

Zwischen dem Bodenprofil 2 und dem Gehäuseprofil 3 ist im Bereich der Verbindungselemente 5, 6 eine EMV-Dichtung 10 vorgesehen, z.B. als Schnur.

Durch das Sicherungselement 9 kann der Anpressdruck auf die EMV-Dichtung verstärkt werden.

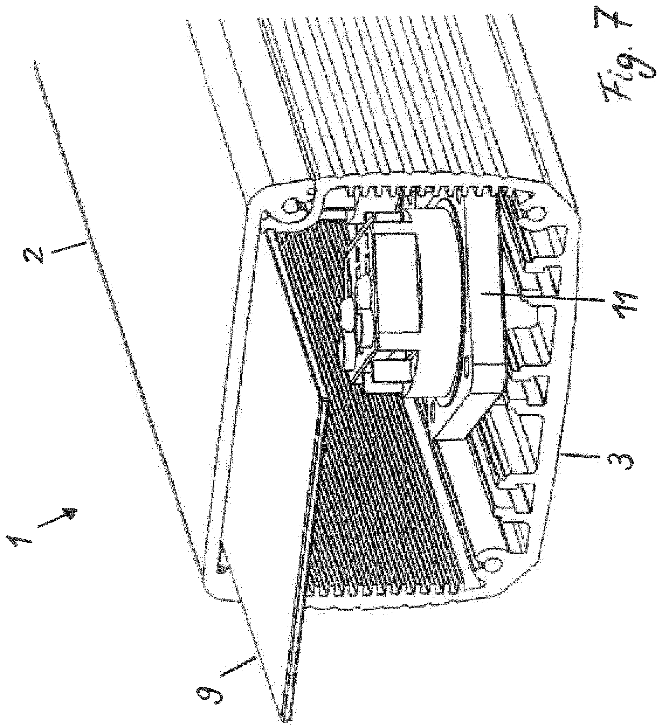

Zum Zusammenbau eines Steckkontaktelements werden zunächst die einzelnen Elemente wie etwa Schuko-Buchsen 11 und Filterelemente und dergleichen in das Gehäuseprofil 3 eingesetzt und verkabelt, siehe Fig. 7. Sodann wird das Bodenprofil 2 mit dem Gehäuseprofil 3 verbunden, insbesondere eingeschoben oder bei Schnappverbindungausführung aufgedrückt. Sodann wird das Sicherungselement wie in Fig. 7 illustriert stirnseitig eingeschoben. Schließlich werden Endkappen oder dergleichen montiert.

### Bezugszeichenliste

- 1: Gehäuse
- 2: Bodenprofil
- 3: Gehäuseprofil
- 4: Versteifungs- und/oder Befestigungsrippen und/oder -elemente
- 5: Gehäuseprofil-Verbindungselement
- 6: Bodenprofil-Verbindungselement
- 7, 8: Abschnitt
- 9: Sicherungselement
- 10: EMV-Dichtung
- 11: Schuko-Buchsen

## Patentansprüche

1. Gehäuse (1) für ein Steckkontaktelement zur abhörsicheren Versorgung einer IT-Komponente mit elektrischer Energie, umfassend ein langgestrecktes Gehäuseprofil (3) und ein langgestrecktes Bodenprofil (2), mit einem Eingriff zwischen Gehäuse- und Bodenprofil (3, 2) und einem ein Lösen des Eingriffs verhindernden Sicherungselement (9), das stirnseitig in das Gehäuse eingeschoben ist, **dadurch gekennzeichnet, dass** im Eingriff eine EMV-Dichtung (10) angeordnet ist.

2. Gehäuse nach Anspruch 1, **dadurch gekennzeichnet, dass** das Sicherungselement (9) flach ist.

3. Gehäuse nach Anspruch 1 oder 2, **dadurch gekennzeichnet, dass** das Sicherungselement (9) stirnseitig verjüngt ist.

4. Gehäuse nach einem der Ansprüche 1bis 3, **dadurch gekennzeichnet, dass** das Sicherungselement (9) im eingesetzten Zustand eine Spreizwirkung auf den Eingriff ausübt.

5. Gehäuse nach einem der Ansprüche 1 bis 4, **dadurch gekennzeichnet, dass** das Sicherungselement (9) ein Stahlblech ist.

6. Gehäuse nach einem der Ansprüche 1 bis 5, **dadurch gekennzeichnet dass** das Gehäuseprofil (3) im Wesentlichen U-förmig ist und an den Enden der beiden freien Schenkel jeweils ein Gehäuseprofil-Verbindungselement (5) aufweist zum Eingriff mit einem Gegenstück am Bodenprofil (2).

7. Gehäuse nach einem der Ansprüche 1 bis 6, **dadurch gekennzeichnet dass** das Bodenprofil (2) im Wesentlichen flach ist und an den längsseitigen Enden jeweils ein Bodenprofil-Verbindungselement (6) aufweist zum Eingriff mit einem Gegenstück am Gehäuseprofil (3).

8. Gehäuse nach einem der Ansprüche 1 bis 7, **dadurch gekennzeichnet, dass** der Eingriff als Schnappverbindung ausgestaltet ist.

9. Gehäuse nach einem der Ansprüche 1 bis 8, **dadurch gekennzeichnet, dass** der Eingriff elastisch ist und das Sicherungselement (9) den Eingriff komprimiert und die EMV-Dichtung (10) an das Bodenprofil (2) und das Gehäuseprofil (1) andrückt.

10. Steckkontaktelement zur abhörsicheren Versorgung einer IT-Komponente mit elektrischer Energie, wobei das Steckkontaktelement ein Gehäuse (1) nach einem der Ansprüche 1 bis 9 umfasst.

11. Verfahren zum Zusammenbau eines Steckkontaktelements nach Anspruch10, **dadurch gekennzeichnet, dass** einzelne Elemente wie etwa Schuko-Buchsen (11), Filterelemente und/oder dergleichen in ein langgestrecktes Gehäuseprofil (3) eingesetzt und verkabelt werden und das Gehäuseprofil (3) mit einem langgestreckten Bodenprofil (2) unter Ausbildung eines Gehäuses (1) nach einem der Ansprüche 1 bis 9 in Eingriff gebracht sowie ein Sicherungselement (9) stirnseitig in das Gehäuse (1) eingeschoben wird und ein Lösen des Eingriffs verhindert, wobei im Eingriff eine EMV-Dichtung angeordnet ist.

## Claims

1. Housing (1) for a plug-in contact element for the interception-proof supply of an IT component with electrical energy, comprising an elongate housing profile (3) and an elongate base profile (2), with an engagement between the housing profile (3) and the base profile (2), and a securing element (9) which prevents a disengagement of the engagement and which is inserted into the housing from one end, **characterized in that** an EMC seal (10) is arranged in the engagement.

2. The housing according to claim 1, **characterized in that** the securing element (9) is flat.

3. The housing according to claim 1 or 2, **characterized in that** the securing element (9) is tapered.

4. The housing according to one of claims 1 to 3, **characterized in that** the securing element (9) in the inserted state exerts a splaying effect on the engagement.

5. The housing according to one of claims 1 to 4, **characterized in that** the securing element (9) is a steel sheet.

6. The housing according to one of claims 1 to 5, **characterized in that** the housing profile (3) is essentially U-shaped and has a housing-profile connecting element (5) at the respective ends of the two free legs for engagement with a counterpart on the base profile (2).

7. The housing according to one of claims 1 to 6, **characterized in that** the bottom profile (2) is essentially flat and has a bottom-profile connecting element (6) at its respective longitudinal ends for engagement with a counterpart on the housing profile (3).

8. The housing according to one of claims 1 to 7, **characterized in that** the engagement is configured as a snap connection.

9. The housing according to one of claims 1 to 8, **characterized in that** the engagement is elastic and the securing element (9) compresses the engagement and presses the EMC seal (10) against the base profile (2) and the housing profile (1).

10. A plug-in contact element for the interception-proof supply of an IT component with electrical energy, wherein the plug-in contact element comprises a housing (1) according to one of claims 1 to 9.

11. Method for assembling a plug-in contact element according to claim 10, **characterized in that** individual elements such as Schuko sockets (11), filter elements and/or the like are inserted into an elongate housing profile (3) and wired, and the housing profile (3) is brought into engagement with an elongate base profile (2) so as to form a housing (1) according to one of claims 1 to 9, and a securing element (9) is inserted into the housing (1) from one end and prevents a disengagement of the engagement, wherein an EMC seal is arranged in the engagement.

## Revendications

1. Boîtier (1) pour un élément de contact enfichable pour l'alimentation en énergie électrique sans risque de manipulation d'un composant informatique, comprenant un profilé de boîtier allongé (3) et un profilé de base allongé (2), avec un emboîtement entre le boîtier et le profilé de base (3, 2) et une libération de l'élément de sécurité (9) empêchant l'emboîtement, qui est poussé dans le boîtier du côté avant, **caractérisé en ce qu'**un joint CEM (10) est disposé dans l'emboîtement.

2. Boîtier selon la revendication 1, **caractérisé en ce que** l'élément de sécurité (9) est plat.

3. Boîtier selon la revendication 1 ou 2, **caractérisé en ce que** l'élément de sécurité (9) est effilé à son extrémité.

4. Boîtier selon une des revendications 1 bis 3, **caractérisé en ce que** l'élément de sécurité (9) exerce un effet d'écartement sur l'emboîtement à l'état inséré.

5. Boîtier selon une des revendications 1 à 4, **caractérisé en ce que** l'élément de sécurité (9) est une tôle d'acier.

6. Boîtier selon une des revendications 1 à 5, **caractérisé en ce que** le profilé de boîtier (3) est essentiellement en forme de U et comporte un élément de raccordement de profilé de boîtier (5) aux extrémités des deux branches libres pour venir en prise avec une contrepartie sur le profilé de base (2) .

7. Boîtier selon une des revendications 1 à 6, **caractérisé en ce que**
le profilé de base (2) est essentiellement plat et présente un élément de raccordement de profilé de sol (6) sur chacune des extrémités longitudinales pour l'emboîtement avec une contrepartie sur le profilé de boîtier (3).

8. Boîtier selon une des revendications 1 à 7, **caractérisé en ce que** l'emboîtement est réalisé sous forme d'encliquetage.

9. Boîtier selon une des revendications 1 à 8, **caractérisé en ce que** l'emboîtement est élastique et l'élément de sécurité (9) comprime l'emboîtement et presse le joint CEM (10) sur le profilé de base (2) et le profilé de boîtier (1).

10. Elément de contact enfichable pour l'alimentation en énergie électrique sans risque de manipulation d'un composant informatique, **caractérisé en ce que** l'élément de contact enfichable comprend un boîtier (1) selon une quelconque des revendications 1 à 9.

11. Procédé d'assemblage d'un élément de contact enfichable selon la revendication 10, **caractérisé en ce que** des éléments individuels tels que des douilles Schuko (11), des éléments filtrants et/ou similaires sont insérés et câblés dans un profilé de boîtier allongé (3) et le profilé de boîtier (3) est amené en prise avec un profilé de base allongé (2) pour former un boîtier (1) selon une des revendications 1 à 9 et un élément de sécurité (9) est poussé dans le côté avant du boîtier (1) et empêche l'emboîtement de se desserrer, dans lequel un joint CEM est disposé dans l'emboîtement.
